# EUROPEAN PATENT SPECIFICATION

(11) **EP 2 557 939 B1**
(45) Date of publication and mention of the grant of the patent: **15.04.2015**
(21) Application number: 11722544.1
(22) Date of filing: 14.04.2011
(51) Int. Cl.: A23K 1/00, A23K 1/16, A23K 1/175, A23K 1/18

(54) **COMPOSITIONS FOR ANIMAL FEED COMPRISING A BUTYRATE SALT**
TIERFUTTERFORMULIERUNGEN MIT BUTYRATSALZ
FORMULATIONS POUR L'ALIMENTATION ANIMALE COMPRENANT UN SEL DE BUTYRATE

(30) Priority: 15.04.2010 NL 2004557
(43) Date of publication of application: 20.02.2013
(73) Proprietor: Sanluc International NV, 9860 Gijzenzele (BE)
(72) Inventor: GOETHALS, Luc, B-9860 Gijzenzele (BE)
(74) Representative: den Hartog, Jeroen H.J.
(86) International application number: PCT/IB2011/051625
(87) International publication number: WO 2011/128871

(56) References cited:
- EP-A1- 1 354 520
- EP-A2- 1 439 160

## Description

The invention relates to animal feed formulations comprising a butyrate salt.

Butyrate salts are known feed additives (raw materials) for health improvement of farm animals such as poultry, swine, and cattle. The additive is generally used as a sodium or calcium salt, though other cations can be used. Butyrate has a positive effect on a number of characteristics of the animals, but it is a foul smelling product, and it can be unpleasant to work with, which is why its actual use remains limited.

It is an object of the invention to provide butyrate salt comprising formulations having better handling properties and less or no odor.

To this object the invention provides formulations in which the butyrate salt mainly consists of a mixed butyrate and lactate salt of a bivalent metal ion (also, mixed salt of calcium butyrate lactate), in which the butyrate:lactate ratio lies between 3:1 and 1:3.

Lactic acid salts are known feed additives as well.

There are publications describing the combined use of several feed additives. US 2004/010040 (equivalent of EP 1439160), for example, describes the combined use of calcium lactate, calcium fumarate with small quantities of calcium butyrate. However, it is surprising that mixed salts of butyric acid and lactic acid of at least bivalent metals, and at least 25% butyrate, but even at 50 mole % or higher have very little smell.

In a preferred embodiment of the invention the mixed salt is in the form of granules with a coating. The use of a coating for butyrate salt particles in itself is disclosed in EP 1354520. However, the description is very general, and does not teach how to effectively obtain particles with a high active substance content.

In a further preferred embodiment, the mixed salt is used with other active ingredients.

Furthermore, the invention provides animal feed formulations comprising granules of mixed butyrate lactate salts, if so desired, coated granules, in which the formulation may comprise other active ingredients, if so desired.

### THE MIXED BUTYRATE LACTATE SALTS

The mixed butyrate lactate salts are metal salts. The salt may be liquid (and be used on a carrier), but is preferably solid at temperatures below 70 °C.

Suitable cations are bi- or multivalent metal cations, but are not limited to, calcium, zinc, manganese, copper, selenium, magnesium, iron, and such, and their mixtures. The cation is preferably chosen for the stability of the salt and the nutritional value. Preferably, the salt is a zinc or calcium salt, and more preferably a calcium salt, because this salt is more stable and harder. Other suitable cations are, for example, selenium, magnesium, copper, and/or iron. The latter metal ions may be used mixed with - for example - calcium, thereby supplementing the feed with organic metal compounds that are useful to the animal.

The butyric acid and lactic acid used in a ratio of 3:1 and 1:3 (on molar basis).

In a preferred embodiment of the invention the amount butyric acid on molar basis is equal or smaller than the amount of lactic acid, and the ratio is between 1:1 and 1:2, more preferably between1:1 and 1.5 (butyric acid : lactic acid).

In another preferred embodiment of the invention the butyric acid and lactic acid are preferably used in a ratio of 2:1 and 1:2 (on molar basis), more preferably between 1.5:1 and 1:1.5, and most preferably a ratio of about 1:1 (1.2:1 to 1:1.2).

The butyrate lactate salt is usually prepared from butyric acid, lactic acid, and a base. Suitable butyric and lactic acids may originate from a chemical source or a fermentative (biological) source. Suitable bases include, but are not limited to, calcium hydroxide, zinc oxide or hydroxide, copper oxide or hydroxides, manganese oxide or hydroxide, selenium oxide, and iron hydroxide. The water that is formed during the reaction, must be removed and is preferably evaporated. Considering the fact that the reaction is exothermic, the evaporation can be effected with little or no input of external energy. Otherwise, filtering the crystallized material is possible as well. Suitable methods are disclosed in US 1951250, EP 630579, and US 2004/010040.

The method for preparing the mixed salt is not critical, and may for example consist of successively adding the lactic acid and butyric acid to a base; or first mixing the lactic acid and butyric acid, and adding a base to the liquid, or adding the mixture to the base. Preferably, the mixed salt is prepared by allowing a mixture of butyric acid and lactic acid to react with a base. An effective preparation method is for example spraying of a mixture of the organic acids on lime particles.

The butyrate lactate salt is usually amorphous or polycrystalline, or mixtures thereof, and preferably polycrystalline.

The sizes of the butyrate lactate salt particles are preferably such that they can be handled with ease. Usually the particle size is about 1 µm or more, preferably 0.01 mm or more, and more preferably 0.1 mm or more. Usually the particle size is 2 mm or less, preferably 1 mm or less. Suitable particle sizes include 0.1 mm, 0.4-0.6 mm, 0.5 mm, and 0.7 mm.

If the obtained particles are too large, the product can be made smaller (for example by milling) until the desired particle size is obtained.

The mixed butyrate lactate salt has the unexpected advantage that it has almost no butyric acid smell, and, therefore, most advantageously, can be mixed into animal feed without any further treatment.

The mixed butyrate lactate salts according to the invention are found to be harder than, for example, the butyrate salts. This is advantageous, because this way less attrition will occur during any further treatment.

If so desired, other acids, fillers, or other components may be present during the preparation of the mixed salt.

Although the mixed salt has virtually no butyric acid smell, it is preferably used as a coated granular product. This has the advantage that it is more stable and has virtually no smell, even on the longer term, and that the handling is improved further. The coating can be relatively thin, while still providing a superior long-term protection against butyric acid smell. Preferably, the coated granules have a particle size 0.05 mm or larger, more preferably 0.1 mm or larger, and most preferably 0.2 mm or larger. Usually the coated particles will be about 2 mm or smaller, preferably 1 mm or smaller, and most preferably 0.8 mm or smaller.

The particle size is measured using classical sieve analysis. The upper limit is an absolute value (that is, all particles can pass through a sieve, thus obtaining particles of less than, for example, about 1 mm). The lower limit is given as the size for which more than 95 wt% is larger than the value given, preferably more than 98%, and most preferably more than 99 wt% is larger than the value given as the lower limit. Attrition may lead to a small amount of smaller particles, for example during transport.

In a preferred embodiment of the invention the mixed butyrate lactate salts are comprised in granular particles that are coated. Such granular particles preferably comprise a binder and a coating. The binder acts as a matrix to glue the mixed salt particles together, yielding a strong granule, and the coating provides extra strength and further reduces the smell. The binder and the coating may be the same or different, and may be chosen from a large range of materials. Preferably, a compound that is present in normal feed formulations, such as a fatty acid derivative, hydrocarbon or protein, is used. It is particularly preferred to use a fatty acid derivative (fat, in short) as a coating, because the fat increases the flowability of the product. Fat is also preferred as the binder, because it further aids in the protection against moisture. Suitable other materials include starch, dextrin, cellulose and derivatives thereof, such as carboxy methyl cellulose (cmc).

Preferably, the granular particles comprise a core in which the main part of the mixed butyrate lactate salt is present, and a coating in which the mixed butyrate lactate salt concentration is about 20 wt% or lower. Preferably the amount of the mixed butyrate lactate salt in the coating of the particles is about 10 wt% or less, and even more preferably about 5 wt% or less. The amount may be a small as 2-3 wt%.

The butyrate and lactate are supposed to exert their activities in the intestines, particularly the small (but also the large) intestine. Therefore, another advantage of the use of fat is that this helps in reaching the intestines. However, other binders and coatings may be used for that purpose as well; carboxy methyl cellulose, for example, is able to reach the large intestine.

Preferably, the granule is stable at about 50 °C or higher for a better storage stability. In a more preferred embodiment the granules are stable up until about 55 °C or higher, and even more preferably 60 °C or higher, giving the granules the ability to withstand the temperatures at which calf-milk is prepared (about 56-60 °C). The upper limit of the stability is not critical, but usually the product will degrade at a temperature of about 150 °C, and in most cases a stability temperature of about 100 °C or lower will be sufficient. In this context stable means that the granules remain integral particles if they are kept in water for 10 min. at the test temperature. Stability at higher temperatures is also of importance to withstand the temperatures during extrusion or pellet formation. During pellet formation of feed products temperatures of up to 90 °C are often reached for several seconds. A heat stability of 10 min. in water at, for example, 60 °C is usually sufficient to withstand 90 °C for several seconds as well.

Suitable fats are glyceride esters of fatty acids, alkyl esters of fatty acids, fatty acids, hydroxyl fatty acid analogues of the above, fatty alcohols (such as waxes), and their mixtures. Fatty acids usually have 12 or more, preferably 16 or more, such as 18, 20 and/or 22 carbon atoms. Suitable fatty acids include hydroxy fatty acids. Preferably the fatty acid derivative is a predominantly triglyceride ester of fatty acids, and more preferably it is the hard fraction of vegetable oils. Preferably the fatty acids or fatty acid esters have melting points of about 50 °C or higher, more preferably 57 °C or higher. Usually the melting point will be about 120 °C or lower, preferably 100 °C or lower.

In one preferred embodiment glycerol fatty acid esters (or fats) are used, because these are easily available and stable. Suitable fats include vegetable or animal fats. For reasons of hygiene, vegetable fats are preferred. Suitable examples of fats include the hard fractions of coconut oil, palm oil, and such. The fats may be partially or fully hydrogenated oils or (semi)purified oils, such as hydrogenated castor oil, and such.

The granules may be prepared in, for example, a rotary granulator, to which preferably the butyrate salt and the binder are added to form granules. Next, the coating can be sprayed on the granules, preferably also in the rotary granulator, but this can also be performed in a fluid bed.

Preferably the amount of binder and coating is about 50 wt% or less, more preferably about 35 wt% or less, and in certain embodiments about 25 wt% or less. Increasing the amount of binder and coasting usually enhances the strength of the granules and further reduces the smell. However, a further reduction of the smell is hardly of any value in the case of mixed butyrate lactate salts. Furthermore, because the amount of mixed butyrate lactate salts decreases, the costs per unit of feed additive value increase, which is disadvantageous. Usually the amount of binder and coating will be about 5 wt% or more, and preferably about 10 wt% or more in order to obtain an improved strength and reduction of smell.

Usually the granules contain about 50 wt% butyrate lactate salt or more. Preferably grades are available with about 60 wt% butyrate lactate or more, such as about 70 wt%.

In addition the binder, the coating, and the butyrate salt the granules may contain other ingredients such as excipients, fillers, or other active materials. Examples of further materials include: aromatic compounds to exhibit a more pleasing smell; emulgators and/or polymers to increase the viscosity and/or hardness of the coating, such as polyacrylates, polyvinylpyrrolidon polymers and such; colorants, and such.

It is also possible to process other active components during granulating or applying the coating, in such a way that the granules contain several active components.

Usually the butyrate lactate, preferably in the form of a mixed calcium butyrate lactate salt, is present in animal feed in an amount of 20 g per ton, preferably about 60 g per ton or more. Usually the amount will be about 5 kg per ton or less, preferably about 2 kg per ton or less, and even more preferably about 1 kg or less. The upper limit is not critical, but a higher amount would increase the costs with little or no advantages. The lower limit of the amount may be important for reaching the desired effect and may require some experimentation to find the optimum amounts from an economic perspective.

For example, in the case of the use of encapsulated calcium butyrate lactate with 35% available active butyrate, an amount of about 200 g or more per ton feed is preferred. Usually an amount of 3 kg or less per ton feed is preferred.

### OTHER INGREDIENTS IN THE FORMULATION

In a further embodiment of the invention the feed additive formulation comprises the mixed butyrate lactate salt and at least one other active ingredient, preferably another biologically active compound. Suitable additional biological activities are inhibiting bacterial Infections, coloring, growth, and quality of the produced food, such as protein content, and such.

Usually the combination of two active compounds has some advantages In comparison to a single compound, but the effect is usually less than both effects added together. In the invention the at least two compounds have an added, or more preferably a synergistic effect together with the butyrate salt. The combined effect can be defined as synergistic (enhancing) and/or additive (expanding) without having an antagonistic or diminishing effect on the activity of one or more other additives. It was surprising that particularly coated granulated butyrate usually shows an additive or synergistic effect instead of a less-than-additive effect like most of the other feed additives.

In the formulation that comprises a butyrate lactate salt and at least one other active ingredient, the butyrate lactate salt is preferably a salt as described above. More preferably the butyrate lactate salts are used as coated granular particles in the formulation with another active ingredient. The use of butyrate lactate salt as coated granular particles has the advantage that the butyrate lactate salt shows very little or no interaction (or reaction) with the other ingredients in the feed additive formulation.

Preferably, the further active ingredient is a plant extract, short and/or medium chain fatty acid(s), probiotic(s), prebiotic(s), yeast extract(s) or derivatives thereof, nucleotides, toxin absorbing clay, polyunsaturated long chain fatty acid(s), fat soluble vitamins, or mixtures, or combinations thereof.

Preferably the additive has a health effect in the sense that it reduces the need for antibiotics. In another embodiment the additive has a nutritional value in the sense that the additive increases the utility of the feed.

The formulation with additive is preferably aimed at exerting its most important effect in the large intestine. Therefore, the formulation is designed in such a way that a large part passes through the stomach and a large part is digested in the large intestine.

A suitable solubility test that may be used, is analogous to the test described in S. Boisen and J Fernandez in Animal Feed Science Technology 68 (1997) 277-286. The amount dissolved in a gastric juice like liquid may be determined as follows: about 2 g coated butyrate lactate formulation is added (without milling) to about 105 ml solvent at pH 2, as described in the reference, with 3 ml pepsin solution containing 75 mg pepsin (porcine, 2000 FIP-U/g). Preferably the amount dissolved within 1 hr is less than 20 wt%, and more preferably less than 10 wt% at 39 °C. Even more preferably less than 20 % and preferably less than 10% dissolved formulation is measured after 2 hr at 39 °C. Next, the amount dissolved in the small intestine can be calculated as follows: A solution obtained after 1 hr according to step 1 is subsequently brought to pH 6.8, as described in the reference, and 3 ml of a pancreatin solution containing 300 mg pancreatin (porcine, grade IV, Sigma) is added and the vessel is kept at 39 °C for 2-4 hr, while stirring. Preferably, the amount dissolved after 4 hours is about 80% or more, and more preferably about 90% or more of the formulation. Alternatively, the amount dissolved after 2 hr is preferably about 80% or more, and may even be 90% or more. The amount dissolved refers to the amount of butyrate.

Preferably the feed additive contains 100 g or more mixed butyrate lactate salt and about an 50 g or more of each of the other ingredients, to be added per ton feed. Preferably the feed additive is composed in such a way that one kg is added to one ton feed. In such a case it is preferred to have about 10% or more of each of the required ingredients per kg feed additive. Usually each of the ingredients will be present in an amount of 70% or less. Preferably the respective amounts are about 20% or more of each compound, and about 50% or less of each compound. In composing such a feed additive the required amount butyrate lactate salt is preferably determined first, after which the suitable amount of a further critical ingredient is determined next. Usually one of the other compounds may be less critical and can be used to complement up to 1 kg.

Furthermore, it is feasible to add organic or inorganic fillers, such as calcium carbonate, silica, sepiolite, wheat bran, corn cob meat, chicory pulp, and such, to make up a total formulation of 1 kg.

### PLANT EXTRACTS

In another preferred embodiment the feed additive comprises a (preferably encapsulated) butyrate lactate salt ingredient and a plant extract.

Preferably the plant extract is an active compound; active in the sense that a useful biological effect is observed.

Suitable plant extracts include extracts with the effect of improving the quality or quantity of the food product (animals or animal products). Suitable effects include the prevention of intestinal disorders, reduction of bacterial growth (antibacterial effect), reduction of mold growth (anti-mold effect), improved feed efficiency (increased daily weight gain of the animals), improved food product, such as less urea in milk, fewer cracks in eggshells, improved coloring, more fats or proteins In milk, and such.

Examples of suitable plant extracts include, but are not limited to, oregano oil or its ingredients, thymol and carvacrol, cinnamaldehyde, ionone, artemisin, eugenol, citrus extract, tannin extracts and grape extracts.

In a preferred embodiment of the invention a tannin extract of the sweet chestnut tree (Castanea sativa) is used. Such an extract shows mold and bacterial growth inhibiting properties. Suitable amounts include about 50 g or more per ton feed, preferably about 100 g or more per ton feed. Usually the amount will be about 10 kg per ton feed or less, preferably about 5 kg per ton or less. Smaller amounts may be suitable for poultry, while amounts in the higher ranges are suitable for rabbits and in the medium ranges for cattle and swine.

The combined use of butyrate lactate salt and tannin shows a synergistic effect on the growth and health of the animals.

In another embodiment the plant extracts comprise increased amounts of polyfenols, such as flavones, flavonones, anthocyanins, and catechins. The amounts that are suited, may depend on the purity level of the plant extracts, and if they are very pure, the amounts may be as small as 10 g per kg feed additive per 1 ton feed, but usually an amount of about 50 g or more, as described above, will be useful.

Simple additives that for example merely limit the amount of ammonia excretion, are less preferred, and will preferably not be used.

### TOXIN ABSORBING COMPOUND

In a preferred embodiment a toxin absorbing compound is present in the feed additive according to the invention. The toxin absorbing compound helps in improving the health of the animals. Toxins, and in particular mycotoxins or aflatoxins, are produced by molds that may be present in crops, such as the *fusarium* or *aspergillus* species. It was found that certain clays exhibit a good absorption of aflatoxins as well as other non-polar mycotoxins, which is an advantage. Preferably, the clay used according to the invention exhibits an absorption of about 30% or more for vomitoxin. In another embodiment of the invention the clay used exhibits an absorption of about 40% or more for zearelanone. The absorption is measured with in vitro absorption and in vivo validation methods (M.Sabater- Faculty of Veterinary Medicine of the Utrecht University, Sala de Miguel - Laboratorios Atheleias Buenos Aires).

Preferably the clay is of the bentonite and/or montmorillonite type that preferably comprises silicates of the ileite type and ambrosite type. The clay product may, In addition to mycotoxin binding properties, possess properties that aid with free-flowing behavior and pellet formation.

### FORMULATIONS WITH FATTY ACIDS OR OTHER ORGANIC ACIDS

In one preferred embodiment the butyrate salt is combined with other organic acids with 3 carbon atoms or more up to 40 carbon atoms. Suitable organic acids with 3 carbon atoms or more include medium chain length fatty acids and highly unsaturated long chain fatty acids and their derivatives. The organic acids may be used as esters with mono or polyfunctional alcohols, as esters of metals or such; usually the use of these acids as free acid is less preferred. In case the compounds are liquid at temperatures below 40 °C, it is preferred to use these absorbed on a carrier material, considering the fact that it is preferred to use solid components in the formulation. Suitable carriers may be clay, silica, or such.

Suitable medium chain length fatty acids are fatty acids with 5-14 carbon atoms, such as caproic acid, caprylic acid, capric acid, or lauric acid, and their salts.

In a preferred embodiment of the invention alcohol esters of organic acids are used, and preferably glycerol based esters. Examples of these are short or medium chain triglycerides (MCT's), short or medium chain diglycerides and monoglycerides, and mixtures thereof.

Preferred long chain highly unsaturated acids include fatty acids with 16 to 30 carbon atoms and at least 2 carbon-carbon double bonds. Suitable examples include linoleic acid; oleic acid; arachidonic acid (ARA); eicosatrenoic acid, eicosapentanoic acid (EPA), docosapentanoic acid, and docosahexanoic acid (DHA).

Suitable amounts are amounts such as described above.

The combined effect of butyric acid and specific medium chain length fatty acids or glyceride esters may Improve the feed efficiency in particular, because the animals are healthier.

The combined effect of butyric acid and highly unsaturated fatty acids is in particular an increase in the growth of the animals and the food quality of the animal products.

### PREBIOTICS, PROBIOTICS, and CELL EXTRACTS

In a further embodiment the butyric acid salt is combined with prebiotic compounds. These are compounds that make sure that the gastrointestinal tract develops more and healthier microorganisms. Suitable prebiotics include, but are not limited to, oligosaccharides, such as fructo-, manno-, or galactooligo saccharides. The combined effect of the butyric acid salt and prebiotics is a further improvement of the health of the animals, further reducing the need of medical treatments, such as with antibiotics.

In a further embodiment the butyric acid salt is combined with probiotics and/or cell extracts. Probiotics may be living cells, such as *lactobacillus, bacillus, enterococcus,* or *saccharomyces,* that contribute to a healthy intestinal flora. Extracts of these species, such as cell membranes, cell walls, and such, may be useful as well. Preferred are *bacillus* or *coccus* species obtained from the gastrointestinal tract of the animal species.

### FAT-SOLUBLE VITAMINS

In a further embodiment the butyrate salt is combined with fat-soluble vitamins, such as vitamin A, B, D and/or E. Instead of the vitamin itself it is also possible to use metabolites of such vitamins. A particularly preferred vitamin is vitamin D3 and its 25-hydroxy metabolite and the 1,25-hydroxy metabolite (cholecalciferol).

### ANIMAL FEED

The mixed butyrate lactate salt, if so desired in combination with other active ingredients, is mixed with a base feed for animals. The feed additive is preferably used in an amount of about 1 kg per ton feed, because this can be applied easily in practice. However, other amounts may be suitable for mixing as well.

The standard feed may comprise cereal products as hydrocarbon source, such as corn, wheat and barley, millet, rice and their byproducts, cassava; protein sources, such as soy meal, rapeseed meal, sunflower meal, whey powder, milk powder, fish meal, and such.

The feed additive according to the invention may be in the form of pellets, mash, or crumble, and can be used mixed with a complete feed or in premixtures.

The feed with the feed additive according to the invention is useful for a large variety of animals. Suitable animals include swine and piglets, calves and cattle, several kinds of poultry, sheep, and other farm animals, such as rabbits and aquaculture species.

The invention does not relate to, and excludes, the use of butyrate salts and formulations comprising butyrate salts combined with other active compounds for human use or human pharmaceutical applications.

The invention will be further elucidated with examples, without being limited thereto.

### Examples 1-2

Calcium lactate butyrate was prepared using 50 kg butyric acid, 60 kg lactic acid (food grade), and a 50/50 molar amount of CaO and Ca(OH)₂. The water was condensed and treated in a wastewater plant. The obtained crystalline mixture was milled, if required, and screened to a 0.1-1 mm fraction.

Calcium butyrate lactate granules were prepared in a rotary granulator. The hard fraction of coconut and palm oil was injected into a batch of calcium butyrate lactate. The first of two Injections ensured granule formation from the butyrate lactate crystals. The subsequent injections of the fats ensured the formation of a coating, with about 2-5 wt% of CaButLac. The granules were screened, and the 0.2 to 1.0 mm fraction was obtained for feed additive purposes.

### Examples 4-8

With the multicrystalline and with the granular mixed butyrate lactate salt, the following mixtures can be prepared, which show improved health benefits and/or quality of food products.

| Example | 4 | 5 | 6 | 7 | 8 |
|---|---|---|---|---|---|
| Product | g | G | g | g | G |
| CaButLac 70% granules | 1000 | | 600 | | 700 |
| CaButLac crystalline | | 700 | | 700 | |
| Bentonite clay | | 300 | | | |
| Thymol (35% on clay) | | | | | 100 |
| Tannin extract (80%) | | | 200 | | |
| *Bacillus* probiotic | | | | 300 | |
| Capric acid triglyceride (absorbed on silica) | | | | | 200 |
| Calcium carbonate | | | 100 | | |
| 25-hydroxy vitamin D3 | | | 100 | | |

The products of examples 4 and 5 show, when fed to chickens in amounts of 0.5 to 1.5 kg per ton of normal feed, an increased eggshell strength and feed conversion. The products of examples 5 and 6 show an improved health and resistance against bacterial intrusion in the gastrointestinal tract.

## Claims

1. Formulation suitable for use in animal feed comprising a mixed salt of an at least bivalent metal ion with lactic acid and butyric acid, in which lactate and butyrate are present in a ratio between 3:1 and 1:3.

2. Formulation according to claim 1, in which the at least bivalent metal ion is chosen from the group comprising calcium, zinc, copper, selenium, iron, manganese, and magnesium, and is preferably calcium.

3. Formulation according to any one of claims 1-2, in which the mixed salt is present in the form of coated granules, in which the granules preferably have a particle size of 0.1 mm or more, more preferably 0.2 mm or more, and a particle size of about 2 mm or less and preferably about 1 mm or less

4. Formulation according to claim 3, in which the granules comprise a binder and coating.

5. Formulation according to any one of claims 3-4, in which the granules are stable at about 50 °C or higher, preferably up to about 55 °C or higher.

6. Formulation according to any one of claims 3-5, in which the granules comprise fats as binder and as coating, preferably glyceride esters of fatty acids, alkyl esters of fatty acids, fatty acids, or mixtures thereof.

7. Formulation according to any one of claims 3-6, in which the granules contain about 50 wt% or more, preferably about 70 wt% or more butyrate lactate salt.

8. Formulation according to any one of claims 1-7, in which the formulation comprises one or more other active ingredients, preferable chosen from the group consisting of plant extracts, prebiotic compounds, probiotics, yeast extracts, short chain fatty acid(s), medium chain fatty acids, unsaturated long chain fatty acids, fat-soluble vitamins and toxin absorbing compounds. 25

9. Formulation according to claim 8, in which two active ingredients are chosen from the group of claim 8.

10. Formulation according to any one of claims 8 - 9, in which each of the active ingredients is used in an amount of about 50 g or more per ton feed, preferably about 100 g per ton feed, and in which the amount is about 10 kg per ton feed or less, preferably about 5 kg per ton or less.

11. Formulation according to any one of claims 1-7, in which the, if so desired, coated granules contain the mixed butyrate lactate salt as the sole active compound.

12. Use of a formulation according to any one of the preceding claims as feed additive for animal feed.

13. Feed for animals comprising a feed and a formulation according to any one of claims 1-11.

14. Formulations mainly consisting of a mixed butyrate and lactate salt of an at least bivalent metal ion, in which the lactate and butyrate are present in a ratio between 3:1 and 1:3.

15. Formulation according to claim 14, in which the mixed salt is present in the form of coated granules, the granules preferably have a particle size of 0.1 mm or more, more preferably 0.2 mm or more, and a particle size of about 2 mm or less, preferably about 1 mm or less, and in which the at least bivalent metal is chosen from the group comprising calcium, zinc, copper, selenium, iron, manganese, and magnesium, and is preferably calcium, and in which the granules contain about 50 wt% or more, preferably about 70 wt% or more butyrate lactate salt.

## Patentansprüche

1. Zubereitung, die zur Verwendung in Tierfutter geeignet ist und ein gemischtes Salz eines wenigstens zweiwertigen Metallions mit Milchsäure und Buttersäure umfasst, wobei Lactat und Butyrat in einem Verhältnis zwischen 3:1 und 1:3 vorhanden sind.

2. Zubereitung gemäß Anspruch 1, wobei das wenigstens zweiwertige Metallion aus der Gruppe, die Calcium, Zink, Kupfer, Selen, Eisen, Mangan und Magnesium umfasst, ausgewählt ist und vorzugsweise Calcium ist.

3. Zubereitung gemäß einem der Ansprüche 1 bis 2, wobei das gemischte Salz in Form von überzogenen Körnern vorhanden ist, wobei die Körner vorzugsweise eine Teilchengröße von 0,1 mm oder mehr, besonders bevorzugt 0,2 mm oder mehr, und eine Teilchengröße von etwa 2 mm oder weniger und vorzugsweise etwa 1 mm oder weniger aufweisen.

4. Zubereitung gemäß Anspruch 3, wobei die Körner ein Bindemittel und einen Überzug umfassen.

5. Zubereitung gemäß einem der Ansprüche 3 bis 4, wobei die Körner bei etwa 50 °C oder mehr, vorzugsweise bis zu etwa 55 °C oder mehr, stabil sind.

6. Zubereitung gemäß einem der Ansprüche 3 bis 5, wobei die Körner Fette als Bindemittel und als Überzug umfassen, vorzugsweise Glyceridester von Fettsäuren, Alkylester von Fettsäuren, Fettsäuren oder Gemische davon.

7. Zubereitung gemäß einem der Ansprüche 3 bis 6, wobei die Körner etwa 50 Gew.-% oder mehr, vorzugsweise etwa 70 Gew.-% oder mehr, Butyrat-Lactat-Salz enthalten.

8. Zubereitung gemäß einem der Ansprüche 1 bis 7, wobei die Zubereitung einen oder mehrere weitere Wirkstoffe umfasst, die vorzugsweise aus der Gruppe ausgewählt sind, die aus Pflanzenextrakten, präbiotischen Verbindungen, Probiotika, Hefeextrakten, kurzkettigen Fettsäuren, mittelkettigen Fettsäuren, ungesättigten langkettigen Fettsäuren, fettlöslichen Vitaminen und toxinabsorbierenden Verbindungen besteht.

9. Zubereitung gemäß Anspruch 8, wobei zwei Wirkstoffe aus der Gruppe von Anspruch 8 ausgewählt sind.

10. Zubereitung gemäß einem der Ansprüche 8 bis 9, wobei die Wirkstoffe jeweils in einer Menge von etwa 50 g oder mehr pro Tonne Futter, vorzugsweise etwa 100 g pro Tonne Futter, verwendet werden und wobei die Menge etwa 10 kg pro Tonne Futter oder weniger, vorzugsweise etwa 5 kg pro Tonne oder weniger, beträgt.

11. Zubereitung gemäß einem der Ansprüche 1 bis 7, wobei die gegebenenfalls überzogenen Körner das gemischte Butyrat-Lactat-Salz als einzige aktive Verbindung enthalten.

12. Verwendung einer Zubereitung gemäß einem der vorstehenden Ansprüche als Futterzusatz für Tierfutter.

13. Futter für Tiere, umfassend ein Futter und eine Zubereitung gemäß einem der Ansprüche 1 bis 11.

14. Zubereitungen, die hauptsächlich aus einem gemischten Butyrat- und Lactat-Salz eines wenigstens zweiwertigen Metallions bestehen, wobei das Lactat und Butyrat in einem Verhältnis zwischen 3:1 und 1:3 vorhanden sind.

15. Zubereitung gemäß Anspruch 14, wobei das gemischte Salz in Form von überzogenen Körnern vorhanden ist, wobei die Körner vorzugsweise eine Teilchengröße von 0,1 mm oder mehr, besonders bevorzugt 0,2 mm oder mehr, und eine Teilchengröße von etwa 2 mm oder weniger und vorzugsweise etwa 1 mm oder weniger aufweisen und wobei das wenigstens zweiwertige Metall aus der Gruppe, die Calcium, Zink, Kupfer, Selen, Eisen, Mangan und Magnesium umfasst, ausgewählt ist und vorzugsweise Calcium ist und wobei die Körner etwa 50 Gew.-% oder mehr, vorzugsweise etwa 70 Gew.-% oder mehr, Butyrat-Lactat-Salz enthalten.

## Revendications

1. Formulation appropriée à une utilisation dans l'alimentation animale comprenant un sel mixte d'un ion métallique au moins bivalent avec un acide lactique et un acide butyrique, dans laquelle le lactate et le butyrate sont présents selon un rapport compris entre 3:1 et 1:3.

2. Formulation selon la revendication 1, dans laquelle ledit ion métallique au moins bivalent est choisi dans le groupe comprenant le calcium, le zinc, le cuivre, le sélénium, le fer, le manganèse, et le magnésium, et est de préférence calcium.

3. Formulation selon l'une quelconque des revendications 1 et 2, dans laquelle le sel mixte est présent sous forme de granulés enrobés, dans laquelle les granulés ont de préférence une taille de particule de 0,1 mm ou plus, de manière davantage préférée de 0,2 mm ou plus, et une taille de particule d'environ 2 mm ou moins et de préférence d'environ 1 mm ou moins.

4. Formulation selon la revendication 3, dans laquelle les granulés comprennent un liant et un enrobage.

5. Formulation selon l'une quelconque des revendications 3 et 4, dans laquelle les granulés sont stables à environ 50 °C ou plus, de préférence jusqu'à environ 55 °C ou plus.

6. Formulation selon l'une quelconque des revendications 3 à 5, dans laquelle les granulés comprennent des matières grasses comme liant et comme enrobage, de préférence des esters de glycérides d'acides gras, des esters d'alkyles d'acides gras, des acides gras, ou des mélanges de ceux-ci.

7. Formulation selon l'une quelconque des revendications 3 à 6, dans laquelle les granulés contiennent environ 50 % en poids ou plus, de préférence environ 70 % en poids ou plus, de sel de butyrate-lactate.

8. Formulation selon l'une quelconque des revendications 1 à 7, dans laquelle la formulation comprend un ou plusieurs autres ingrédients actifs, de préférence choisis dans le groupe constitué d'extraits végétaux, composés prebiotiques, probiotiques, extraits de levure, acides gras à chaîne courte, acides gras à chaîne moyenne, acides gras à chaîne longue insaturés, vitamines liposolubles et composés absorbant les toxines.

9. Formulation selon la revendication 8, dans laquelle deux ingrédients actifs sont choisis dans le groupe de la revendication 8.

10. Formulation selon l'une quelconque des revendications 8 à 9, dans laquelle chacun des principes actifs est utilisé dans une quantité d'environ 50 g ou plus par tonne d'aliment, de préférence d'environ 100 g par tonne d'aliment, et dans laquelle la quantité est d'environ 10 kg par tonne d'aliment ou moins, de préférence d'environ 5 kg par tonne d'aliment ou moins.

11. Formulation selon l'une quelconque des revendications 1 à 7, dans laquelle, si on le souhaite, les granulés enrobés contiennent le sel mixte de butyrate-lactate en tant que composé actif unique.

12. Utilisation d'une formulation selon l'une quelconque des revendications précédentes comme additif alimentaire pour l'alimentation animale.

13. Aliment pour animaux comprenant un aliment et une formulation selon l'une quelconque des revendications 1 à 11.

14. Formulations constituées principalement d'un sel mixte de butyrate et de lactate d'un ion métallique au moins bivalent, dans lesquelles le lactate et le butyrate sont présents selon un rapport compris entre 3:1 et 1:3.

15. Formulation selon la revendication 14, dans laquelle le sel mixte est présent sous forme de granulés enrobés, dans laquelle les granulés ont de préférence une taille de particule de 0,1 mm ou plus, de manière davantage préférée de 0,2 mm ou plus, et une taille de particule d'environ 2 mm ou moins, de préférence d'environ 1 mm ou moins, et dans laquelle ledit ion métallique au moins bivalent est choisi dans le groupe comprenant le calcium, le zinc, le cuivre, le sélénium, le fer, le manganèse, et le magnésium, et est de préférence le calcium, et dans laquelle les granulés contiennent environ 50 % en poids ou plus, de préférence environ 70 % en poids ou plus, de sel de butyrate-lactate.
